Europäisches Patentamt

(19) European Patent Office

Office européen des brevets

(11) Veröffentlichungsnummer: **0 040 680**
**B1**

(12) **EUROPÄISCHE PATENTSCHRIFT**

(45) Veröffentlichungstag der Patentschrift:
16.01.85

(51) Int. Cl.⁴: **B 61 F 5/38,** B 60 B 37/10

(21) Anmeldenummer: **81102170.8**

(22) Anmeldetag: **23.03.81**

(54) Spurführung eines Radsatzes für Schienen- bzw. Gleisfahrzeuge.

(30) Priorität: **22.05.80 DE 3019573**

(43) Veröffentlichungstag der Anmeldung:
**02.12.81 Patentblatt 81/48**

(45) Bekanntmachung des Hinweises auf die Patenterteilung:
**16.01.85 Patentblatt 85/3**

(84) Benannte Vertragsstaaten:
**FR GB IT**

(56) Entgegenhaltungen:
DE - A - 2 164 324
DE - A - 2 240 706
DE - A - 2 259 035
DE - A - 2 614 166
DE - B - 2 848 398
DE - C - 950 011
FR - A - 427 351
FR - A - 574 272
US - A - 3 937 430

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Günther, Christian, Dr., Ludwig-Thoma-Strasse 71, D-8013 Haar (DE)**
Erfinder: **Leo, Rolf, Im Steinfeld 6, D-8206 Bruckmühl (DE)**

**Beschreibung**

Die Erfindung betrifft eine Spurführung eines Radsatzes gemäss dem Oberbegriff des Patentanspruchs.

Bei Schienenfahrzeugen neigen bekanntlich vor allem Drehgestelle mit seitlich relativ starr im Drehgestellrahmen geführten und stark zentrierende Laufflächen aufweisenden Radsätzen – bei sonst günstigen Laufeigenschaften – insbesondere unter höheren Fahrgeschwindigkeiten zu instabilem Lauf, wobei die Drehgestelle unter dem aufliegenden Fahrzeugrahmen schnelle und heftige Drehbewegungen um ihre Hochachse (Gierbewegungen) ausführen: Nach Überschreiten einer bestimmten kritischen Fahrgeschwindigkeit geraten die Drehgestelle in Gierschwingungen verbunden mit seitlichen Schiebe- bzw. Querbewegungen, die sich bei weiterer Erhöhung der Fahrgeschwindigkeit bis zu einem gefährlichen Zick-Zack-Lauf aufschaukeln können. Die Folge ist ein Anschlagen der Spurkränze an die Schienen und damit eine grosse Laufunruhe sowie ein hoher Verschleiss der Spurkränze, Schienen und des Oberbaus. Eine entsprechende Erhöhung des Ausdrehwiderstandes der Drehgestelle beispielsweise mittels Drehhemmungen führt zwar zu einem stabileren Lauf, mindert aber auch die Bogenläufigkeit der Drehgestelle. Letzteres lässt sich selbstverständlich auch bei Verwendung von solchen Drehhemmungen nicht völlig ausschliessen, deren Ausdrehwiderstand mit zunehmender Ausdrehung der Drehgestelle abnimmt. Dagegen kann zwar durch Einrichtungen zur Steuerung der Drehgestelle in eine bestimmte Position zum Gleis die Bogenläufigkeit verbessert werden. Die bekannten Einrichtungen dieser Art vermögen jedoch wegen des Positionierungseffektes nicht, die vorgenannte Aufgabe der Stabilisierung des Drehgestellaufes zu erfüllen. Eine geeignete Lösung hierzu, also den Gierschwingungen und seitlichen Schiebe- bzw. Querbewegungen vorzubeugen, kann auch nicht in Radsätzen mit lose auf der Achswelle drehbar gelagerten Rädern gesehen werden. Die Losradanordnung hat zwar gegenüber dem klassischen Festradsatz mit auf einer gemeinsamen Achswelle festsitzenden, also untereinander starr gekoppelten Rädern den Vorteil, dass bei einer seitlichen Verschiebung des Radsatzes (insbesondere im Gleisbogen) aufgrund der dann unterschiedlichen Rollradien der Räder keine Längsgleitungen zwischen Rad und Schiene mit der Folge von destabilisierenden Zuständen entstehen können. Wegen des Fehlens der Selbstzentrierung werden allerdings – wie beim Automobil – aufwendige Lenk- oder Steuereinrichtungen erforderlich, um im Gleisbogen die Positionierung des Radsatzes vornehmen zu können. Im übrigen ist bekanntlich die Losradanordnung mit hohem Spurkranzverschleiss behaftet.

Eine Verminderung der Gierschwingungen und seitlichen Schiebe- bzw. Querbewegungen bei Drehgestellen mit Festradsätzen ist zwar durch Verkleinern der Laufflächenneigung bei den Rädern möglich, weil dann zwangsläufig die mögliche Rollradiendifferenz und damit auch der davon abhängige (Längs-)Schlupf der Räder geringer wird. Hieraus resultiert jedoch wiederum eine Verminderung der auf das Drehgestell um seine Hochachse ausgeübten Drehmomente (Giermomente) und folglich eine beträchtliche Verschlechterung der Bogenläufigkeit, da diese Drehmomente ein Hauptbestandteil der vom Radsatz ausgeübten Führungskräfte sind. Beim Verkleinern der Laufflächenneigung bzw. Konizität des Radprofils geht also die Stabilisierung des Radsatzes und Drehgestellaufs zu Lasten der Bogenläufigkeit, im Gegensatz zu Radsätzen mit grosser Laufflächenneigung der Radprofile, welche bekanntlich eine gute Bogenläufigkeit und eine relativ schlechte Laufstabilität aufweisen. Im übrigen wird sich unabhängig vom ursprünglich vorgegebenen Profil der Laufflächen über kurz oder lang ohnehin das sogenannte Verschleissprofil mit der Folge einer grossen Rollradiendifferenz der Räder einstellen. Demnach ist grundsätzlich mit destabilisierenden Zuständen zu rechnen.

In Anbetracht dessen stellt sich das Problem, eine Stabilisierung des Radsatzes bzw. des Drehgestellaufs ohne Beeinträchtigung der Bogenläufigkeit bzw. des Führungsverhaltens des Radsatzes unabhängig vom Verschleisszustand der Laufflächen der Räder sicherzustellen. Lösungen hierzu können auch in den drei in der DE-A-22 59 035 beschriebenen Ausführungsformen einer Spurführung von Radsätzen gleisgebundener Fahrzeuge nicht gesehen werden, bei der die Stellung der Achsmittelpunkte der Radsätze zur Mittelebene des Gleises aktiv durch eine Lageregelung beeinflusst wird, deren Stellglieder direkt oder indirekt auf die Radsätze einwirken. Denn allen drei Ausführungsformen ist gemeinsam, dass sie allenfalls nur die aufgrund der Konizität der Laufflächen vorgegebene Steuerungswirkung der Räder zu verbessern vermögen. Bei der ersten Ausführungsform für einen Fest- oder Losradsatz wird dies durch einen Positionierungsvorgang, nämlich durch Drehen des Radsatzes um seine Hochachse mit der Folge einer Veränderung der effektiven Konizität der Laufflächen und somit der Rollradien der Räder erreicht. Da allerdings nur extrem kleine Drehungen zur Beeinflussung des Führungsverhaltens des Radsatzes notwendig sind, ist die betreffende Einrichtung sehr schwer zu realisieren. Dasselbe gilt für die vorgeschlagene axiale Verschiebung der Räder gemäss der zweiten Ausführungsform. Hier stellt sich überdies noch das Problem, dass bei einer Veränderung der Rad-Schiene-Berührungsverhältnisse durch Laufkranzverschleiss der für die Auslegung des Systems angenommene Zusammenhang zwischen Radquerverschiebung und Wanderung des Radaufstandspunktes auf dem Laufprofil nicht mehr besteht. Für eine genaue Wirkung des Systems müsste daher der jeweilige Radaufstandspunkt messbar sein, was natürlich nicht möglich ist. Schliesslich trägt das Vorgeben einer Drehzahldifferenz durch ein Differentialgetriebe gemäss der dritten Ausführungsform, bei der jedes Rad einzeln angetrieben auf einer eigenen Achswelle sitzt und die beiden Achswellen je Radpaar über das Differentialgetriebe gekoppelt sind, auch nur zur Erhöhung der effektiven Konizität der Räder bei. Sobald sich bei dem Radsatz nach längerem Lauf ein Verschleissprofil einstellt, also ein ohnehin eine grosse Rollradiendifferenz verursachendes Profil, wird dessen Wirkung durch die vorgegebene Drehzahldifferenz noch erhöht und damit der Radsatz zwangsläufig destabilisiert. Allen drei Ausführungsformen ist somit gemeinsam, dass die angestrebte Wirkung allenfalls nur bei Rädern mit exakt konischen Laufflächen gewährleistet ist. Sobald sich ein Verschleissprofil ausbildet, sind die zweite und dritte Ausführungsform unbrauchbar. Die erste Ausführungsform ist nur bei herabgesetzter Kreisverstärkung des Regelsystems brauchbar. Dann ist allerdings die Effektivität sehr gering, d.h. das aus einem Verschleissprofil resultierende Führungs- und Stabilitätsverhalten des Radsatzes dominiert.

Im übrigen wird bei einem durch die DE-C-950 011 bekannten Radsatz mit gegeneinander drehbaren Rädern durch Zwischenschaltung einer willkürlich regelbaren Bremse, deren Bremskraft bzw. Wirkung einmalig festgelegt wird, eine Verbesserung des Sinuslaufs bloss insoweit erreicht, dass ein Kleben der Räder dieses Losradsatzes an der Schiene vermieden wird.

Demgegenüber lassen sich aber schliesslich bei einer der im Oberbegriff des Anspruchs 1 angegebenen Gattung entsprechenden Spurführung der DE-C-26 14 166 grundsätzlich unerwünschte Auswirkungen eines Profilverschleisses der Laufflächen der Räder auf die Stabilität ohne Beeinträchtigung des Führungsverhaltens des Radsatzes vermeiden und demzufolge die verschleissgünstigen Schmiegungsverhältnisse beim Verschleissprofil weiterhin ausnutzen. Hier wird nämlich unter der Erkenntnis, dass im Falle von Losrädern (nur in bezug auf eine gemeinsame Achswelle) der aus grossen Rollradiendifferenzen der Räder resultierende destabilisierende (Längs-)Schlupf der Räder relativ zum Gleis im vorgenannten Sinne ohne Schwierigkeiten beeinflussbar ist, eine die Räder verbindende Kupplung nach Massgabe eines Reglers in dem Sinne gesteuert, dass der Schlupf der Kupplung mit zunehmender Fahrzeuggeschwindigkeit vermindert wird. Die grundsätzliche Wirkung der Kupplung ist hier in der Modulierung der (Längs-)Schlupfkräfte zwischen den Rädern und dem Gleis im Sinne der Verbesserung der durch ein Verschleissprofil gegebenen Stabilitätsbedingungen zu sehen. Der Schlupf der Kupplung vermindert die dynamisch wirksame Konizität sowie den dynamisch wirksamen Radabstand und führt damit bei einem Radsatz mit Verschleissprofil der Räder zu einem guten Stabilitätsverhalten. Ein gutes Führungsverhalten in engen Gleisbögen kann in einfacher Weise durch Beseitigung des Schlupfes in der Kupplung erreicht werden, d.h. der Radsatz erfüllt dann die Funktion eines Festradsatzes mit den ihm eigenen guten Führungseigenschaften.

Allerdings muss man bei diesem Radsatz inkaufnehmen, dass die dem Regler zu seiner Funktionserfüllung zuzuführenden Messwerte «Frequenz aufklingender Radsatz-Sinusschwingungen, Seitenverschiebung des Radsatzes gegenüber der Gleismittelebene, am Rad einwirkende Querkräfte» einen beträchtlichen Aufwand an Messstellen am Radsatz bzw. dem zugehörigen Gestell notwendig machen, d.h. an solcher Stelle, wo insbesondere aufgrund von Witterungseinflüssen mit einem höheren Verschleiss und u.U. häufigeren Ausfällen der Messgeräte zu rechnen ist. Daher werden bei einer Spurführung gemäss der DE-C-28 48 398 für den Regler als Eingangswerte bloss Messwerte der Fahrzeuggeschwindigkeit und der Drehzahlen beider Räder sowie ein Schätzwert des jeweiligen wirksamen Gleisbogenradius verwendet, wobei der Regler aufgrund dieser Eingangswerte beim Steuern des Schlupfes der Kupplung einen stabilisierenden Kupplungs-Momentenanteil, der proportional zur Differenzdrehzahl und umgekehrt proportional zur Fahrzeuggeschwindigkeit ist, und einen führenden Kupplungs-Momentenanteil, der umgekehrt proportional zum wirksamen Gleisbogenradius ist, berücksichtigt.

Da allerdings die Eingangswerte der Drehzahlen beider Räder (des Radsatzes) wegen der bei den grossen Absolutdrehzahlen relativ geringen Drehzahldifferenz hohe Anforderungen an die Präzision der Messeinrichtung für diese Zustandsgrösse des Reglers stellen, ist es die Aufgabe der vorliegenden Erfindung, für die Spurführung des Radsatzes (gemäss dem Oberbegriff des Patentanspruchs) auch auf eine Drehzahlmessung verzichten zu können.

Diese Aufgabe ist gemäss dem Kennzeichen des Patentanspruchs gelöst, also durch den gänzlichen Verzicht auf den Regler, anstelle dessen bloss noch mittels einer Steuerung ein Einstellen des Schlupfes der Kupplung aufgrund der Eingangswerte Fahrzeuggeschwindigkeit und/oder wirksamer Gleisbogenradius erfolgt. Das bedeutet im Grunde ein Ausnutzen der nichtlinearen Charakteristik der Kupplung im Sinne einer Schaffung von stabilen Grenzzyklen des Radsatzlaufes bei konsequentem Ausnutzen des zulässigen Spurspiels: Das von der Kupplung, vorzugsweise einer elektromagnetischen Kupplung momentan übertragbare Moment wird durch die jeweilige Fahrzeuggeschwindigkeit und/oder den jeweils wirksamen Gleisbogenradius bestimmt. Solange dieses übertragbare Moment grösser ist als die aus (Längs-)Schlupfkräften Rad/Schiene resultierenden, von aussen auf die Kupplung einwirkenden Momente, lässt die Kupplung naturgemäss keinen Schlupf zu, d.h. der Radsatz verhält sich wie ein Festradsatz. Sobald aber diese von aussen auf die Kupplung einwirkenden Kräfte das momentan übertragbare Kupplungsmoment übersteigen, erzeugt die Kupplung einen ein weiteres Anwachsen der von aussen einwirkenden Momente unterbindenden Schlupf. Das bedeutet letztendlich, dass die Kupplung bloss das für den jeweiligen Fahrzustand stabilisierungs- und führungsmässig nötige übertragbare Moment festlegt bzw. dass hieran der Radsatz orientiert wird und er im übrigen in den durch die übertragbaren Momente fixierten Grenzen unbeeinflusst bleibt. Demgegenüber erfolgt bei der vorgenannten Spurführung gemäss der DE-C-28 48 398 an der Kupplung ein ständiger Eingriff durch den naturgemäss seine entsprechende Wirkung über die Zustandsgrösse Drehzahldifferenz ständig erfassenden Regler.

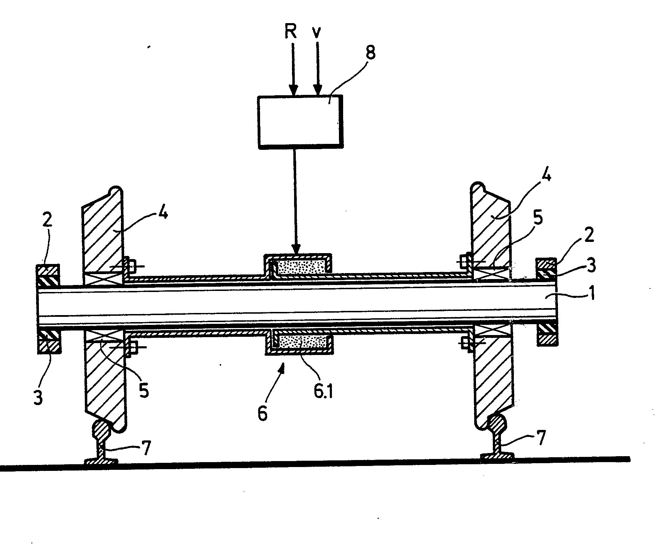

In einem Ausführungsbeispiel wird nachfolgend die Erfindung weiter verdeutlicht. Hierzu zeigt die Zeichnung einen Längsschnitt durch einen Radsatz, dessen Achswelle 1 im Rahmen bzw. den Längsträgern 2 eines Drehgestells beispielsweise über eine – in lateraler und vertikaler Richtung weiche, dagegen in longitudinaler Richtung harte – Federung 3 angeordnet ist. Auf der Achswelle 1 sind die Räder 4 drehbar gelagert; die betreffenden nur symbolisch angedeuteten Radlager 5 können Wälzlager sein. Bei diesem Radsatz sind jedoch die Räder 4 keine sogenannten Losräder, also keine zueinander lose auf der Achswelle 1 sitzenden Räder, weil sie miteinander über eine (auch nur schematisch angedeutete) steuerbare kraftschlüssige Kupplung 6 verbunden sind, welche als ein um die Achswelle 1 drehbar angeordnetes Verbindungsmittel zwischen den Rädern 4 mit ihnen umlaufen kann. Hierbei handelt es sich (vorzugsweise) um eine elektromagnetische Reibkupplung 6, bei der bekanntlich die Reibwirkung eines magnetisierbaren Eisenpulvers 6.1 zum Übertragen von Drehmomenten ausgenutzt wird und ein Schlupf durch Verändern eines Erregerstromes auch im Lauf einstellbar ist. Die Kupplung 6 hat bei dem Radsatz die Funktion, bei dessen Lauf im Falle eines Rollradienunterschiedes der Räder deren Längs-Schlupf zum Gleis 7 zu beeinflussen, und zwar, ausgehend von einem Nennmoment der Kupplung, durch Ändern des übertragbaren Kupplungsmomentes (Schlupfmoment) abhängig von der Fahrzeuggeschwindigkeit v und/oder vom wirksamen Gleisbogenradius R. Zur Stabilisierung des Radsatzes wird das übertragbare Kupplungsmoment mit zunehmender Fahrzeuggeschwindigkeit v abnehmend eingestellt, während bis zu dem der jeweiligen Fahrzeuggeschwindigkeit (aus Stabilisierungsgründen) entsprechenden Kupplungsmoment für den Kurvenlauf das übertragbare Kupplungsmoment mit abnehmendem wirksamen Gleisbogenradius R, also mit zunehmender Enge des Gleisbogens zunehmend eingestellt wird., hierzu kann ein Schätzwert (wie in der DE-C-28 48 398) oder ein Messwert des Gleisbogenradius verwendet werden, etwa unter Ausnutzung von Informationen aus am Gleis vorhandenen Signalisierungsmitteln, z.B. Linienleiter. Für die Einstellung der Kupplung 6 ist eine blosse Steuerung vorgesehen, bei der die Gleichstromversorgung der Kupplung bzw. ihrer (nicht dargestellten) Magnetspule beispielsweise über einen thyristorisierten Drehstromgleichrichter erfolgt, wobei für die Zündimpulse der Thyristoren ein Verstärker 8 die Steuerspannung umgekehrt proportional zur Fahrzeuggeschwindigkeit v und zum Gleisbogenradius R liefert; letztere werden natürlich dem Verstärker 8 als (Mess-)Spannungswerte zugeführt.

**Patentanspruch**

Spurführung eines Radsatzes eines Gestells für Schienen- bzw. Gleisfahrzeuge, dessen profilierte Laufflächen aufweisende Räder zum aktiven Einstellen einer Differenzdrehzahl auf einer gemeinsamen Achswelle (1) drehbar gelagert und über eine steuerbare kraftschlüssige Kupplung (6) miteinander verbunden sind, bei der auch im Lauf ein Schlupf einstellbar ist, dadurch gekennzeichnet, dass der Kupplung (6) eine Steuerung (Verstärker 8) zugeordnet ist, welche aufgrund zugeführter Werte der Fahrzeuggeschwindigkeit (v) einen hierzu umgekehrt proportionalen stabilisierenden Kupplungs-Momentenanteil oder aufgrund zugeführter Werte des wirksamen Gleisbogenradius (R) einen hierzu umgekehrt proportionalen führenden Kupplungs-Momentenanteil oder zugleich diese beiden Momentenanteile berücksichtigt.

**Claim**

A tracking gauge of a wheel set of a bogie for rail or track vehicles whose wheels, having profiled rolling surfaces, are, for the active setting of a differential rotational speed, rotatabley mounted on a common axle shaft (1) and are connected to one another by way of a controllable force-locking coupling (6), in which also, during motion, slippage is adjustable, characterised in that associated with the coupling (6) is a control (amplifier 8) which, by reason of supplied values of the vehicle speed (v), takes into account a stablising coupling moment constituent inversely proportional thereto or, by reason of supplied values of the effective track curve radius (R) takes into account a guiding coupling moment constituent inversely proportional thereto, or conjointly takes into account these two moment constituents.

**Revendication**

Dispositif de guidage pour un train de roues d'un bogie pour véhicules sur rails ou sur voie, dont les roues, présentant des surfaces de roulement profilées, sont montées rotatives sur un arbre d'essieux commun (1) pour le réglage actif d'une vitesse de rotation différentielle et sont mutuellement reliées par un accouplement à friction (6) commandé dans lequel un glissement peut aussi être réglé en marche, caractérisé par le fait qu'à l'accouplement (6) est associée une commande (amplificateur 8) qui, sur la base des valeurs de la vitesse (v) du véhicule qui lui sont appliquées, tient compte d'une composante de stabilisation du moment d'accouplement inversement proportionnel à celles-ci ou, sur la base des valeurs du rayon de courbure effectif (R) de la voie qui lui sont appliquées, tient compte d'une composante de guidage inversement proportionnelle à celles-ci ou tient compte en même temps de ces deux composantes du moment.